# EUROPEAN PATENT APPLICATION

(11) **EP 4 393 852 A1**
(43) Date of publication of application: **03.07.2024**
(21) Application number: 23220846.2
(22) Date of filing: 29.12.2023
(51) Int. Cl.: B65G 47/52, B65G 54/02, B65G 35/06

(54) **AUTOMATION SYSTEM WITH AUGMENTING CONVEYOR**

(30) Priority: 30.12.2022 US 202263477851 P
(71) Applicant: ATS Corporation, Cambridge, Ontario N3H 4R7 (CA)
(72) Inventor: JITOMIRSKY, Mark, Cambridge, N3H 4R7 (CA); KLEINIKKINK, Albert John, Cambridge, N3H 4R7 (CA); LAMBERT, Blake Robert, Cambridge, N3H 4R7 (CA); HOGAN, Roger, Cambridge, N3H 4R7 (CA)
(74) Representative: Ipey

(57) **Abstract**

An automation system including a primary conveyor, the system including: an auxiliary conveyor provided to an overlap portion in which the auxiliary conveyor overlaps with the primary conveyor; wherein the auxiliary conveyor is configured to connect with at least one of the plurality of pallets to control the at least one of the plurality of pallets to augment the function of the primary conveyor. A method for controlling an automation system including: providing an auxiliary conveyor in an overlap portion of the automation system, wherein the auxiliary conveyor is configured to connect with at least one of a plurality of pallets; and when the at least one of the plurality of pallets is in the overlap portion, selectively connecting the auxiliary conveyor to the at least one of the plurality of pallets to provide functions to the automation system not available using the primary conveyor.

## Description

### RELATED APPLICATIONS

The present disclosure claims priority to U.S. Provisional Patent Application No. 63/477,851 filed December 30, 2022, which is hereby incorporated herein in its entirety.

### FIELD

The present disclosure relates generally to automation systems having conveyors. More particularly, the present disclosure relates to an automation system including a primary conveyor, such as an accumulating conveyor, augmented by a secondary conveyor, for example, another type of conveyor such as a linear motor conveyor.

### BACKGROUND

Accumulating conveyor systems have been used in various industries for many years as a way of moving materials, parts, products, or the like (generally "parts") through a process such as a manufacturing process. Accumulating conveyor systems typically include a support body, an endless belt, chain or the like (referred to herein as a "belt" or "chain") that runs over sprockets, gears or the like at either end of the support body, and a plurality of pallets that sit in contact with the belt and support the parts. In a chain conveyor, there may also be bearings that are supported by the chain and configured to rotate freely in relation to the chain. In this arrangement, friction between the pallets and bearings as the bearings move under the pallet moves the pallets along the support body. In this document, the item moved is referred to as a pallet, but it will be understood that, in some cases, the pallet may be an actual part in a situation where a part is shaped such that it can move on the accumulating conveyor without the need for a pallet.

The use of friction between the belt and the pallet to drive the pallet can allow a pallet to be stopped at a location on the accumulating conveyor by inserting a stopper, barrier or the like in front of the pallet. In this case, the belt/chain continues to run under the pallet because the stopper overcomes the friction between the belt or chain/bearings and the pallet. When the stopper/barrier is removed, the friction between the belt/bearings and pallet begin to move the pallet forward again. However, generally, the pallet only begins moving slowly because it can take time for friction between the belt/bearings and the pallet to build and bring the pallet up to the speed of travel of the belt/chain.

Also, since the accumulating conveyor operates using a belt\chain, the maximum speed of any pallet once it gets up to speed is the maximum speed of the belt/chain itself. Further, since the pallet will not necessarily stop when the belt/chain stops (as the friction may not be sufficient to stop the pallet), the maximum speed may be limited by the ability of a stopper/barrier to stop a pallet once it is moving. Further, in some cases, there may be a settling time for pallets to stop moving even after the accumulating conveyor is stopped.

Limitations such as slow start-up, limited maximum speed, and the like can limit the applications in which an accumulating conveyor can be used. As such, there is a need for an improved automation system including an accumulating conveyor and an augmenting conveyor. Further, the concept can be expanded to include other conveyor types and there is a need for automation systems with a primary conveyor and a secondary or augmenting conveyor, wherein each of the primary and secondary conveyors may be of the same or different types.

The above information is presented as background information only to assist with an understanding of the present disclosure. No determination has been made, and no assertion is made, as to whether any of the above might be applicable as prior art with regard to the present disclosure.

### SUMMARY

According to an aspect herein, there is provided an automation system including a primary conveyor and a plurality of pallets configured to operate on the primary conveyor, the system including: an auxiliary conveyor provided to an overlap portion of the automation system in which the auxiliary conveyor overlaps with the primary conveyor; wherein the auxiliary conveyor is configured to connect with at least one of the plurality of pallets in the overlap portion to control the at least one of the plurality of pallets to augment the functions of the primary conveyor. The use of an auxiliary/augmenting conveyor allows different/alternate functionality to be used so that actions can be taken on the pallets/parts thereon that would not be available with the primary conveyor alone. The different/alternate functionality may include at least one of: controlled acceleration in either direction, individual positioning control in either direction, asynchronous or synchronous movement, higher throughput, speed matching, moving the at least one of the pallets to a different portion of the primary conveyor, and reduced settling time.

In some cases, the auxiliary conveyor can be configured to operate while the primary conveyor is operating in the overlap portion.

In some cases, the auxiliary conveyor may be connected after determining if the different/alternate function requires the use of the auxiliary conveyor.

In some cases, the primary conveyor may be an accumulating conveyor and the auxiliary conveyor may be a linear motor conveyor.

In this case, the linear motor conveyor may be configured beneath the accumulating conveyor and moving elements on the linear motor conveyor may be configured to engage with pallets on the accumulating conveyor from below the accumulating conveyor.

In this case, as an alternative, the linear motor conveyor may be configured beneath the accumulating conveyor adjacent one side of the accumulating conveyor and moving elements on the linear motor conveyor may engage with pallets on the accumulating conveyor from a side of the accumulating conveyor.

In some cases, the linear motor conveyor may include a first linear motor conveyor and a second linear motor conveyor opposite the first linear motor conveyor on an opposite side of the accumulating conveyor.

In some cases, the linear motor conveyor may include moving elements and an engagement mechanism provided to at least one moving element, wherein the plurality of pallets can be controlled by the linear motor conveyor by activating the engagement mechanism to engage with at least one of the plurality of pallets.

In some cases, the engagement mechanism may include cam tracks provided to the automation system and cam followers provided to the moving elements configured such that the cam followers follow the cam tracks to raise and lower pins that engage with the pallet.

In some cases, the engagement mechanism may include an actuation mechanism provided to the moving elements to raise and lower the pins.

In some cases, the engagement mechanism may include an activation linear motor conveyor provided adjacent the linear motor conveyor to toggle the pins between raised and lowered positions.

In some cases, the automation system may further include a stopper on the accumulating conveyor to hold at least one of the plurality of pallets in place while the at least one pallet is being engaged by the auxiliary conveyor.

According to another aspect herein, there is provided a method for controlling an automation system including a primary conveyor and a plurality of pallets for the primary conveyor, the method including: providing an auxiliary conveyor in an overlap portion of the automation system in which the auxiliary conveyor overlaps with the primary conveyor, wherein the auxiliary conveyor is configured to connect with at least one of the plurality of pallets; and when the at least one of the plurality of pallets is in the overlap portion, selectively connecting the auxiliary conveyor to the at least one of the plurality of pallets and operating the auxiliary conveyor to provide functions to the automation system not available using the primary conveyor.

In some cases, the auxiliary conveyor can operate while the primary conveyor is operating in the overlap portion.

In some cases, the functions not available using the primary conveyor comprise at least one of: controlled acceleration in either direction, individual positioning control in either direction, asynchronous or synchronous movement, higher throughput, speed matching, moving the at least one of the pallets to a different portion of the primary conveyor, and reduced settling time.

In some cases, the primary conveyor is an accumulating conveyor and the auxiliary conveyor is a linear motor conveyor.

In some cases, the selectively connecting the auxiliary conveyor may include determining if the appropriate function requires the use of the auxiliary conveyor.

Other aspects and features of the present disclosure will become apparent to those ordinarily skilled in the art upon review of the following description of specific embodiments in conjunction with the accompanying figures.

### BRIEF DESCRIPTION OF THE FIGURES

Embodiments of the present disclosure will now be described, by way of example only, with reference to the attached Figures.
Fig. 1A is a perspective view of an accumulating conveyor;
Fig. 1B is a perspective view of another accumulating conveyor having two rails;
Fig. 1C is a partially cut-away perspective view of another accumulating conveyor such as that in Fig. 1A;
Fig. 2 is a side section view of a portion of an accumulating conveyor such as that in Fig. 1C;
Fig. 3 is a section view along section A-A in Fig. 2;
Fig. 4 is a section view along section B-B in Fig. 2;
Fig. 5A is a perspective view an embodiment of a linear motor track section;
Fig. 5B is a perspective open view of the linear motor track section of Fig. 5A;
Fig. 6 is a block diagram of an embodiment of a control architecture for a linear motor conveyor system;
Fig. 7 is a perspective view of an automation system according to an embodiment herein;
Figs. 8A, 8B, 8C and 8D are schematic views illustrating engagement of a pallet in the automation system of Fig. 7;
Figs. 9A and 9B are perspective views of another automation system according to an embodiment herein;
Figs. 10A and 10B are perspective views of a moving element and pin mechanism of the automation system of Figs. 9A and 9B;
Figs. 11A, 11B, and 11C are perspective views showing details of an example engagement mechanism for the automation system of Figs. 9A and 9B;
Figs. 12A and 12B are perspective views of another automation system according to an embodiment herein;
Figs. 13A and 13B are perspective views of a moving element and pin mechanism of the automation system of Figs. 12A and 12B;
Figs. 14A and 14B are perspective views showing details of an example stopper mechanism for the automation system of Figs. 12A and 12B;
Figs. 15A and 15B are perspective views of other automation systems according to embodiments herein;
Fig. 16 is a perspective view showing details of an example engagement mechanism for the automation system of Figs. 15A and 15B; and
Figs. 17A and 17B are perspective views showing details of an example engagement mechanism for embodiments of the automation system; and
Fig. 18 is a flowchart of an embodiment of a method for controlling an automation system.

### DETAILED DESCRIPTION

Generally, the present disclosure relates to an accumulating conveyor augmented by a secondary conveyor system. In particular, an accumulating conveyor is augmented by a linear motor conveyor. Embodiments of the augmented accumulating conveyor herein are intended to enable a combination of the functionality of accumulating conveyors and linear motor conveyors within an automation system.

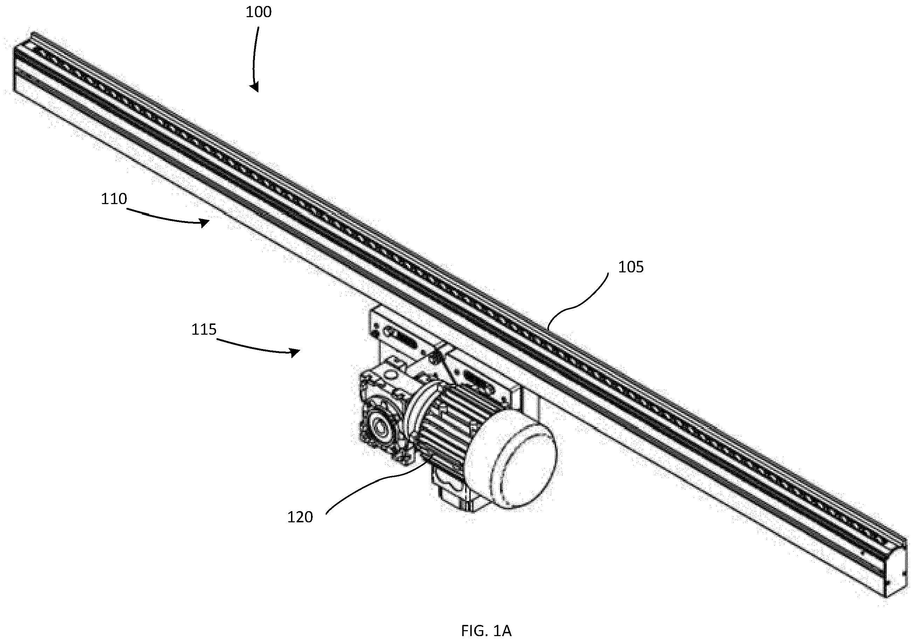

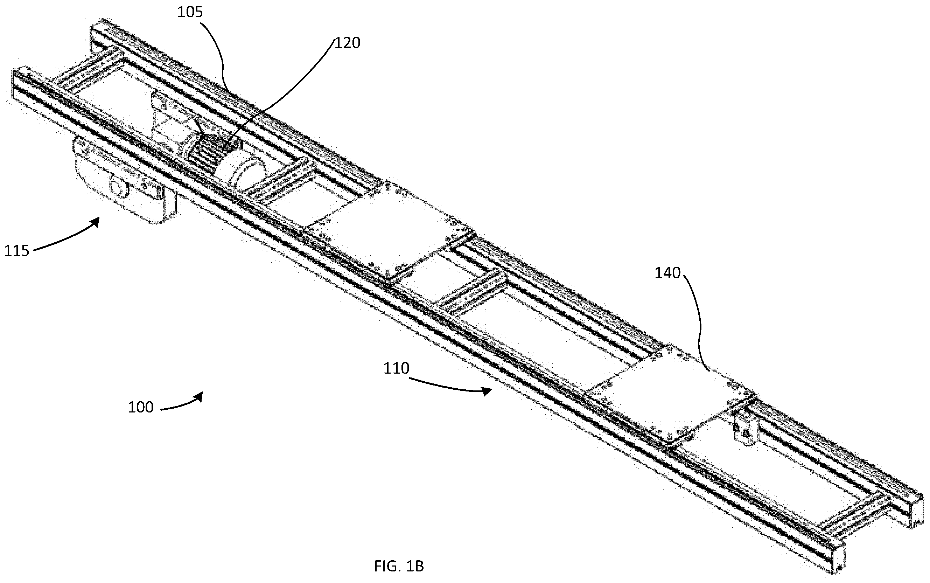

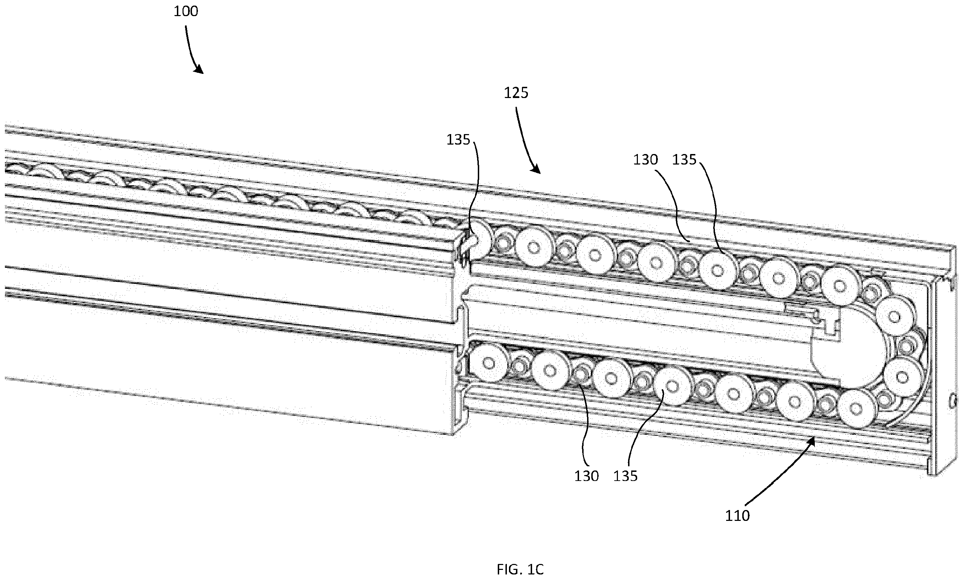

Figs. 1A and 1B are perspective views of an accumulating conveyor 100, one with a single belt/chain and one with two belts/chains, with one on either side of the conveyor. Fig. 1C is a cut-away perspective view of an accumulating conveyor according to an embodiment herein. As shown in Figs. 1A, 1B and 1C, the accumulating conveyor 100 includes a frame 105, which defines a track 110, and supports a drive system 115. The drive system 115 includes a motor 120 to drive at least one belt/chain 125 around the track 110. In some cases, there will be two belts/chains, as shown in Fig. 1B. The frame 105 supports the belt/chain 125 via the track 110, which runs the length of the accumulating conveyor 100 on or in the frame 105. Each belt/chain 125 is typically referred to as an endless loop belt/chain. In the case of a chain 125, the chain 125 typically includes a plurality of chain links 130, at least some of which include a roller/bearing 135 that is configured to rotate about a shaft 137 in relation to the chain link 130 to which it is provided. In operation, the chain 125 is moved forward or backwards on the accumulating conveyor 100. When a pallet 140 is placed on the accumulating conveyor 100, the pallet makes contact with the bearings and, when the chain 125 is moving, the bearings 135 in contact with the pallet will have increased friction between the bearings 135 and the shaft 137 and will cause the pallet to begin moving in the direction the chains 125 are moving. In some cases, a pallet may be stopped on the accumulating conveyor 100 by, for example, an actuator (not shown), causing a stopper (not shown) to be placed in the pallet's path along the conveyor. In this situation, the belt/chain 125 will continue moving and the belt/bearings 135 will remain in contact with the pallet (in a chain conveyor, the bearings will be rolling along the bottom of the pallet) but the stopper will overcome any forward motion imparted to the pallet such that the pallet will remain in place (the stopper will overcome the friction moving the pallet along the accumulating conveyor). When the stopper is removed (by, for example, the actuator being activated again), the friction between the belt/bearings and the shaft caused by the pallet weight will gradually build and the pallet will start moving slowly and eventually accelerate to the speed of the belt/chain again.

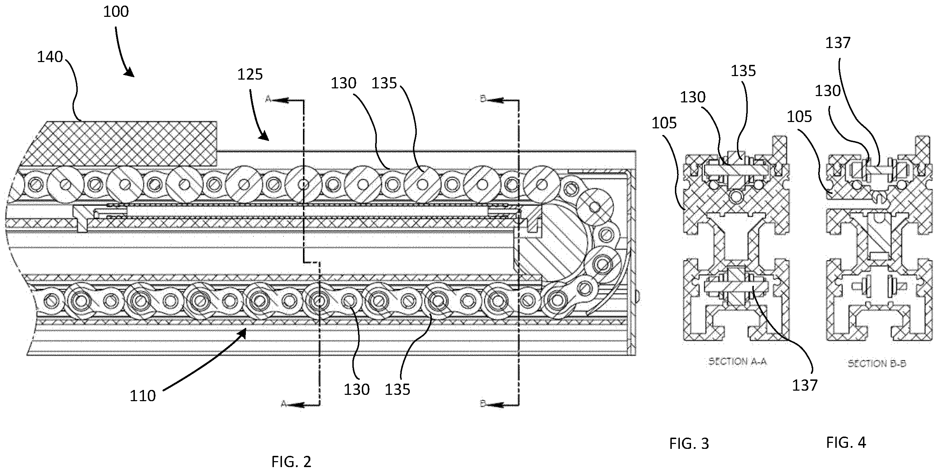

Fig. 2 is a side section view of a portion of an accumulating conveyor 100 that includes a chain and bearings. Fig. 3 is a section view along section A-A in Fig. 2 and Fig. 4 is a section view along section B-B in Fig. 2.

As shown in Figs. 2 to 4, the chain 125 includes the plurality of chain links 130 and at least some chain links 130 (in this case all) include the bearing/roller 135 and shaft 137, with the bearing being free to roll relative to the chain. The chain links 130 also include chain bearings 145 that extend from the chain links and are configured to run in the tracks 110 provided in the frame 105 of the chain conveyor 100.

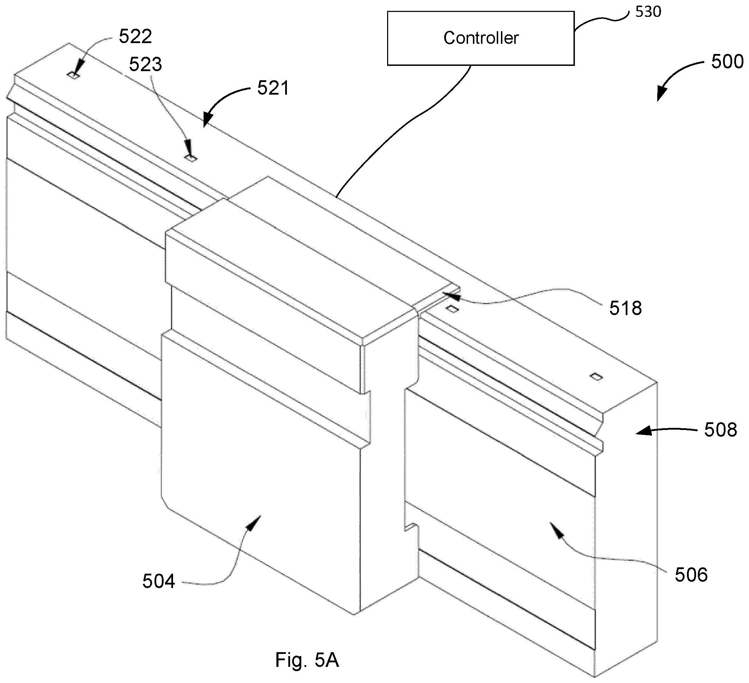

Fig. 5A is a perspective view of a track section 500 of a linear motor conveyor. The track section 500 features one or more moving elements 504 (only one is illustrated) which are configured to ride or travel along a track 506 of the track section 500. The track 506 includes a frame 508 configured to support the moving element 504. Some of the principles of operation of a similar linear motor conveyor are described in more detail in U.S. Patent No. 8,397,896 to Kleinikkink et al., granted on March 19, 2013, which is hereby incorporated herein by reference.

Each track section 500 can be mechanically self-contained and quickly and easily separable from one another so as to be modular in nature. In this modular example, the track sections 500 are mounted on a support (not shown) and can be set up to align and abut one another in order to form a longer linear motor conveyor. In order to be modular, each track section 500 may house self-contained electronic circuitry for powering and controlling the track section 500 and/or the moving element 504. A linear motor conveyor may be formed from one or more track sections 500 and may also include curvilinear track sections.

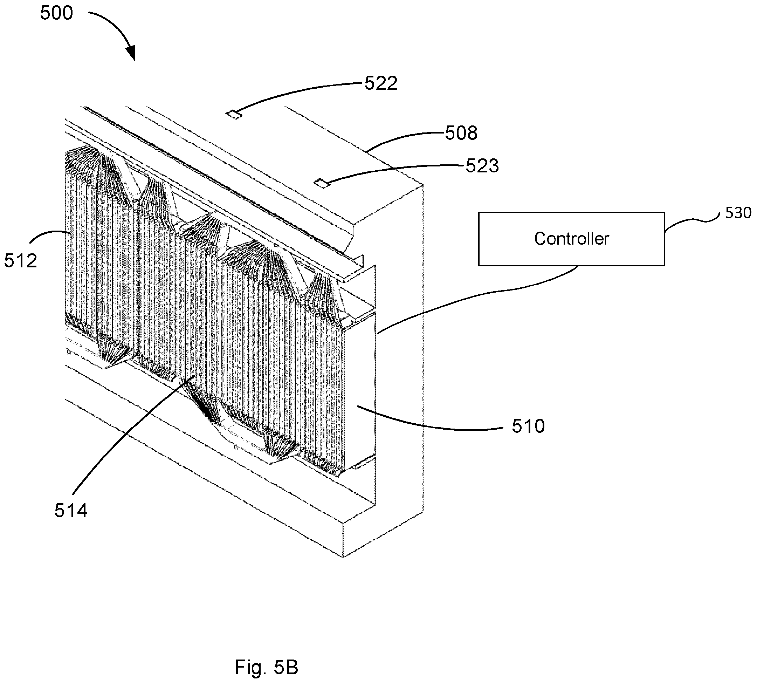

Figure 5B illustrates a perspective open view of the track section 500. The track section 500 includes the frame 508 that houses a linear drive mechanism 510. The linear drive mechanism 510 is formed as a stator armature 512 and a plurality of embedded coils 514. The embedded coils 514 can be individually excited so that an electrically-induced magnetic flux produced by the stator armature 512 is located adjacent to a given moving element 504 to be controlled, in a direction normal thereto, without affecting adjacent moving elements 504. The motive force for translating each moving element 504 arises from the magnetomotive (MMF) force produced by elements (not shown), such as permanent magnets, provided to each moving element 504 and the stator armature 512, i.e., by the tendency of the corresponding magnetic fluxes provided by the stator armature 512 and moving element 504 to align. Structurally, the track section 500 can be broadly classified as a moving-magnet type linear brushless motor having multiple moving elements 504. A controller 530 (illustrated schematically in Figs. 5A and 5B) controls the embedded coils 514 such that separate and independent moving MMFs can be produced along the length of the track section 500 for each moving element 504 so that each moving element 504 can be individually controlled with a trajectory profile that is generally independent of any other moving element 504, aside from collision avoidance.

Referring again to Figure 5A and 5B, in this particular embodiment, each moving element 504 includes an extension 518 provided with a machine readable medium (not shown), which may be, for example, a magnetic strip, an optically transmissive or reflective strip, other type of feedback system or the like. The extension 518 is configured such that the machine readable medium interacts with sensors 522, 523 provided to the frame 508. The sensors 522, 523 are configured to read the machine readable medium, whether magnetically, optically, or otherwise. The machine readable medium and sensors 522, 523 form a position sensing system 521.

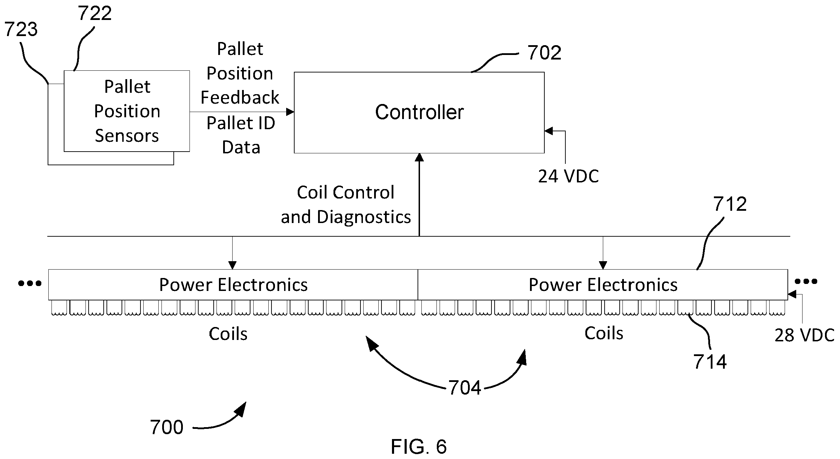

Figure 6 is a block diagram of an example control architecture 700 employed in a linear motor conveyor formed of track sections 500, such as that in Figs. 5A and 5B. A linear motor controller 702 controls the linear motor conveyor and the track sections 704 (two are illustrated). In this case, the linear motor controller 702 may either work with or replace the track section controller 530 described above.

The linear motor controller 702 is connected (either wired or wirelessly) to a stator armature 712 and coils 714 in the track sections 704 and controls the coils 714 in accordance with an independent trajectory or "move" command for each moving element located thereon.

The controller 702 may also be connected to sensors 722, 723 situated in the track section 704. The controller 702 can be configured to implement a closed-loop digital servo control system that controls movement of the moving element by resolving the real-time position of each moving element located in the track section(s) 704. The controller 702 can also make use of the sensors 722, 723 to supply moving element identification data.

In this way, the controller 702 is configured to monitor the position of and control the movement of moving elements (not shown) based on the position to provide process control. The controller 702 may also provide a diagnostic role by monitoring the track sections 704 (e.g., by engaging in a continuous polling or pushing process) in order to determine the current status of any track section 704 and whether any track section 704 has failed

The linear motor controller 702 may also be connected to other devices, including other conveyors, automation stations associated with a conveyor, or the like. Other devices may include, for example, programmable logic controllers (PLCs) (not shown), or the like that connect elements within an automation environment via input/output (I/O) or network modules. The other devices, via PLC or other controllers, may provide instructions to the track section 704 via controller 702, such as directing a location for a moving element to move to along the track, actuating an actuator on the moving element, or the like.

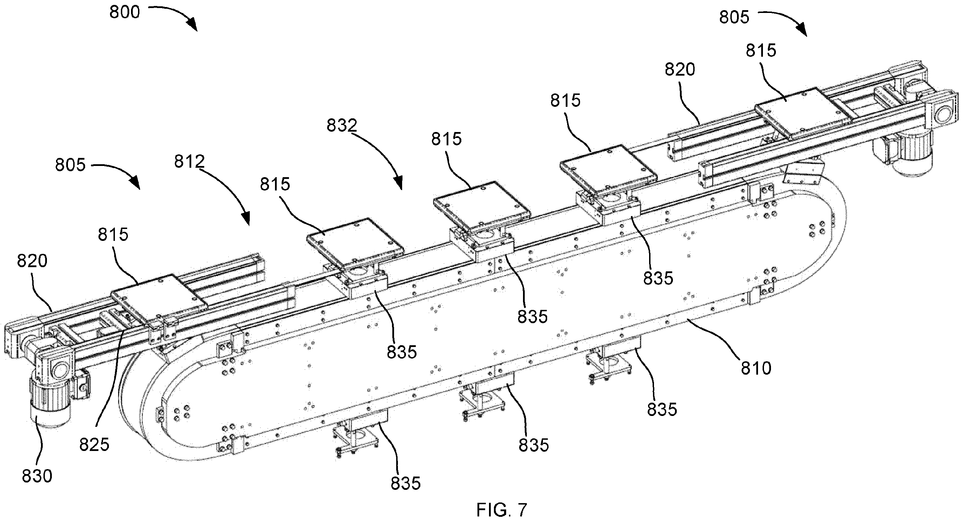

Fig. 7 illustrates an embodiment of an automation system 800 in which a primary conveyor, in this case, an accumulating conveyor 805 is augmented by a secondary or augmenting/auxiliary conveyor, in this case, a linear motor conveyor 810, to provide additional functionality. The auxiliary conveyor 810 is provided in at least an overlap portion 812 of the automation system 800 that would otherwise be covered by the primary conveyor 805. The automation system 800 includes a plurality of pallets 815 configured to work with both the accumulating conveyor 805 and with the auxiliary/linear motor conveyor 810.

In this embodiment, the accumulating conveyor 805 includes two accumulating conveyor segments 820, each provided with an endless belt/chain 825 and a motor 830 driving the endless belt/chain 825. The plurality of pallets 815 travel on the accumulating conveyor 805 as described above. In the embodiment in Fig. 7, the two accumulating conveyor segments 820 are separated by a gap 832 in which the pallets 815 are being controlled by the linear motor conveyor 810. The gap 832 may match with or be smaller than the overlap portion 812. In other embodiments, the accumulating conveyor 805 may not have a gap 832 and the linear motor conveyor 810 may control the pallets as the pallets move along the accumulating conveyor 805. In still other embodiments, the gap 832 may be filled by a roller section, which includes low friction rollers to support the pallet but provide minimal friction such that the pallet can be moved freely by the linear motor conveyor 810.

In this embodiment, the linear motor conveyor 810 is configured as a loop positioned on its side beneath the chain conveyor 805. The linear motor conveyor 810 includes moving elements 835, which circulate around the linear motor conveyor 810 and are adjacent to the chain conveyor 805 when on one side (i.e. the upper side) of the linear motor conveyor 810. The moving elements 835 are configured to engage with the pallets in the overlap portion 812 and support the pallets through the gap 832.

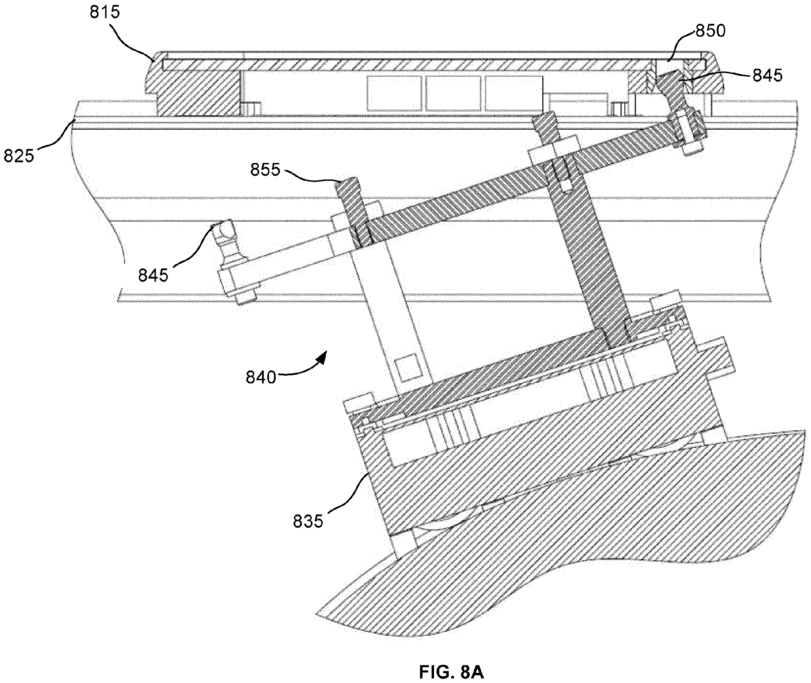

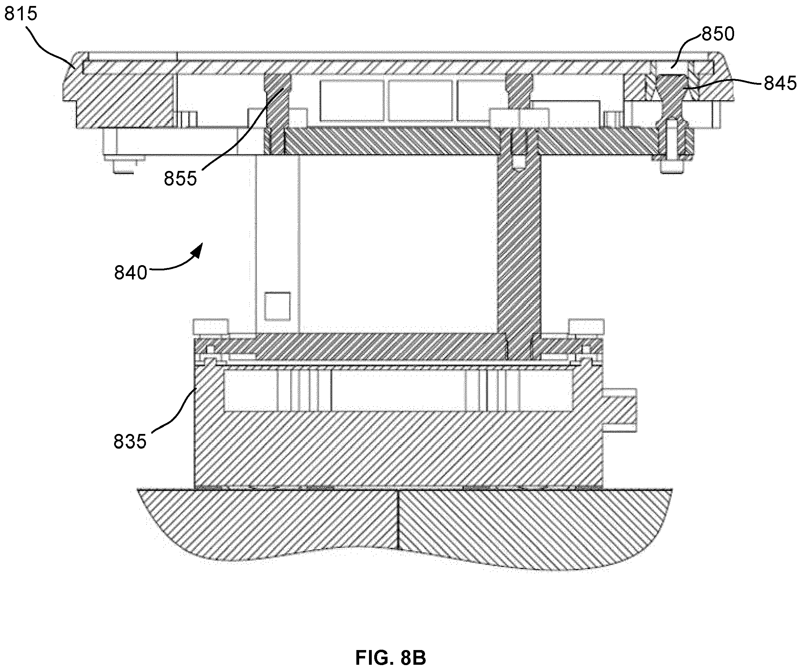

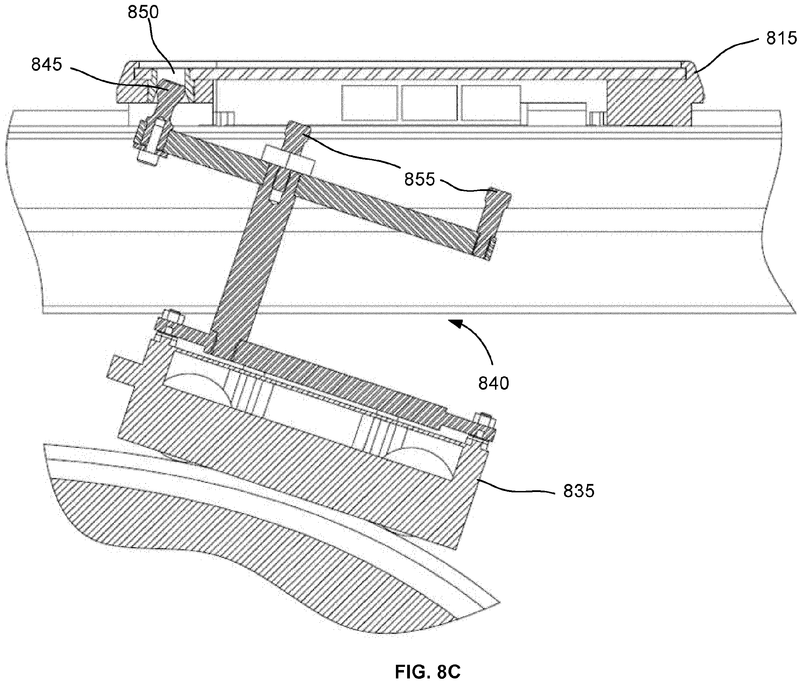

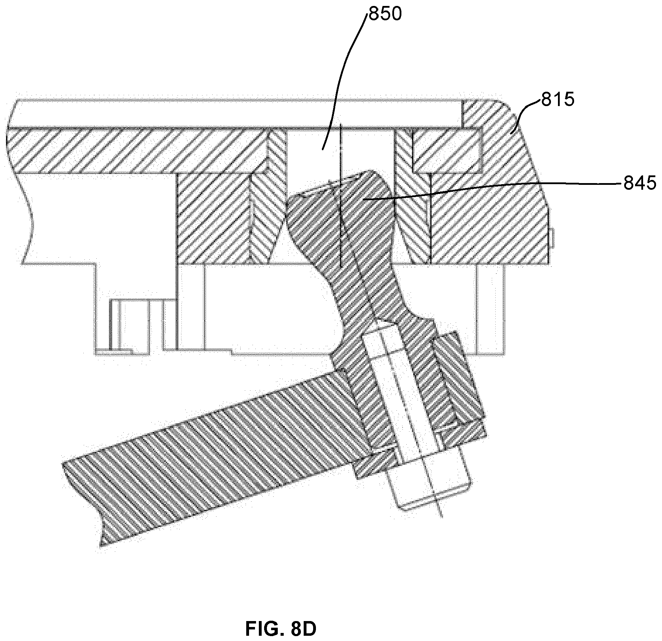

Figs. 8A, 8B, 8C and 8D illustrate the engagement of the moving element 835 with the pallet 815, the control of the pallet 815 by the moving element 835, the disengagement of the moving element from the pallet, and a close-up of the engagement. For the engagement, as shown in Fig. 8A, the pallet 815 can be stopped on the chain conveyor 805 while the moving element 835 is moved under the pallet 815 and an engagement mechanism 840 is operated to engage the moving element 835 with the pallet 815. In this case, the engagement mechanism 840 includes two pins 845 that enter holes 850 provided in the pallet 815. The hole for one side pin is not visible in this section view. The engagement mechanism 840 may also include support structures 855 or the like. When under control of the moving element 835, as shown in Fig. 8B, the pallet 815 can be moved independently of the accumulating conveyor 805 or other pallets 815 due to the independent control of the linear motor conveyor 810 as described herein. For example, the linear motor conveyor can provide additional functionality such as, one or more of: controlled acceleration in either direction, individual positioning control in either direction, asynchronous or synchronous movement, higher throughput, speed matching with the accumulating conveyor or other elements of the automation system, reduced or no settling time needed, or the like. For disengagement, as shown in Fig. 8C, the moving element 835 can be disengaged from the pallet 815 by withdrawing the pins 845, via servos or the like or, as illustrated, due to the curvature of the loop in which the linear motor conveyor is formed. In Fig. 8C, only one side pin 845 and support structures 855 are illustrated due to the position of the section view. Fig. 8D illustrates a close up view of the engagement of the pin 845 with the pallet 815. The pin 845 is configured as a spherical pin for easier engagement with an engagement opening 850 provided on the pallet.

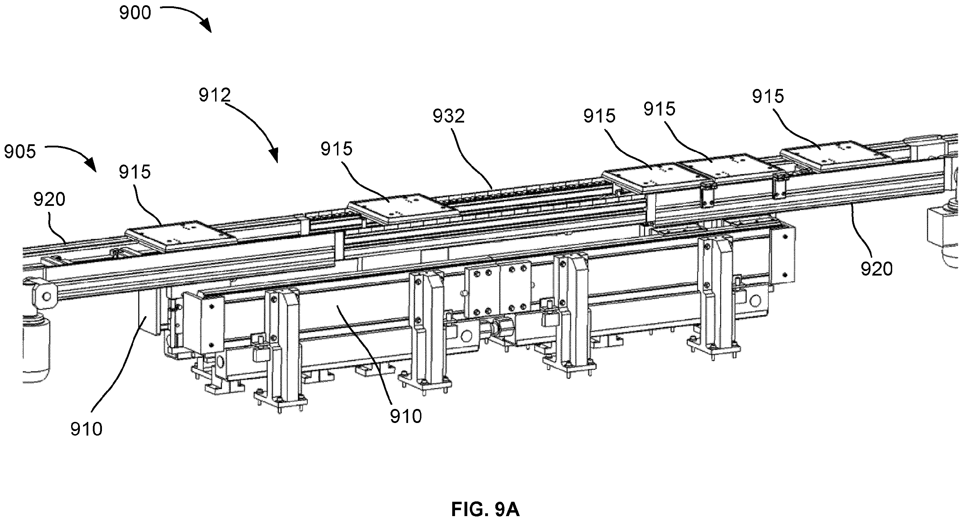

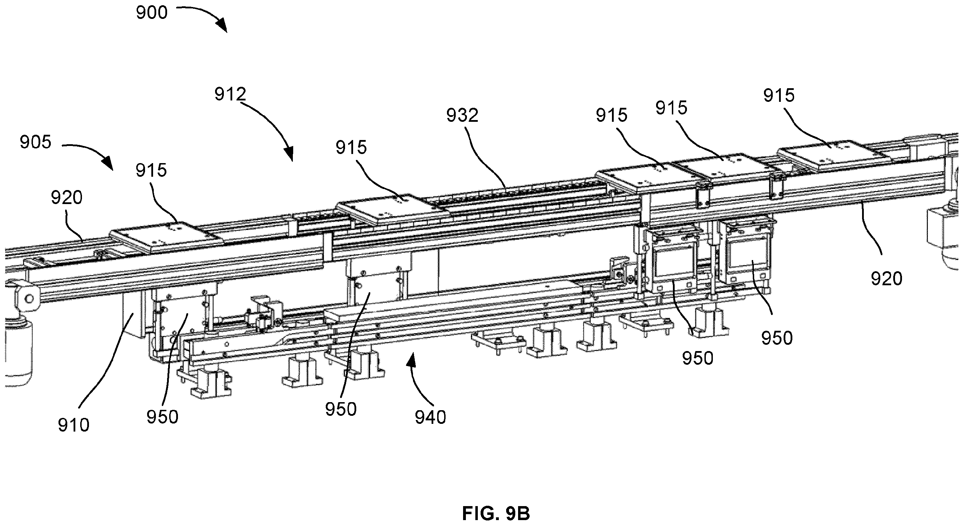

Figs. 9A and 9B illustrate another embodiment of an automation system 900 in which a primary/accumulating conveyor 905 is augmented by an augmenting/linear motor conveyor 910 to provide additional functionality. As in the above embodiment, the automation system 900 includes an overlap portion 912 and also includes a plurality of pallets 915 configured to work with both the accumulating conveyor 905 and with the linear motor conveyor 910.

The accumulating conveyor 905 is similar to the one in the embodiment above in that it has two segments 920. However, in this embodiment, the accumulating conveyor 905 includes a middle section 932, which is formed as a roller section, having freely turning rollers and no belt/chain, rather than a gap as in the embodiment above. When controlled by the linear motor conveyor 910, the pallets 915 can move along the roller section 932 easily because of the minimal friction involved. The roller section 932 also supports the weight of the pallet 915 so that the linear motor conveyor 910 does not need to provide this support as is the case in the embodiment of Fig. 7.

The linear motor conveyor 910 includes at least one linear motor placed under and to a side of the accumulating conveyor. In this embodiment, two linear motors 910 are placed opposite each other on opposite sides of the accumulating conveyor 905 and allow for access to the accumulating conveyor 905 from underneath the accumulating conveyor 905, for maintenance or the like. Fig. 9B illustrates the automation system 900 but with a support structure of one of the linear motor conveyors 910 removed to show the underside of the accumulating conveyor 905. The provision of the linear motor conveyors 910 at the sides of the accumulating conveyor 905 and under the accumulating conveyor 905 allows for access to the top and bottom of the accumulating conveyor 905 for automation stations, maintenance access, and the like. As also shown in Fig. 9B, the automation system 900 is provided with cam tracks 940, in this case, at a base thereof. The cam tracks 940 are a part of an engagement mechanism 945 allowing moving elements 950 on the linear motor conveyor to engage with the pallets 915 on the accumulating conveyor 905.

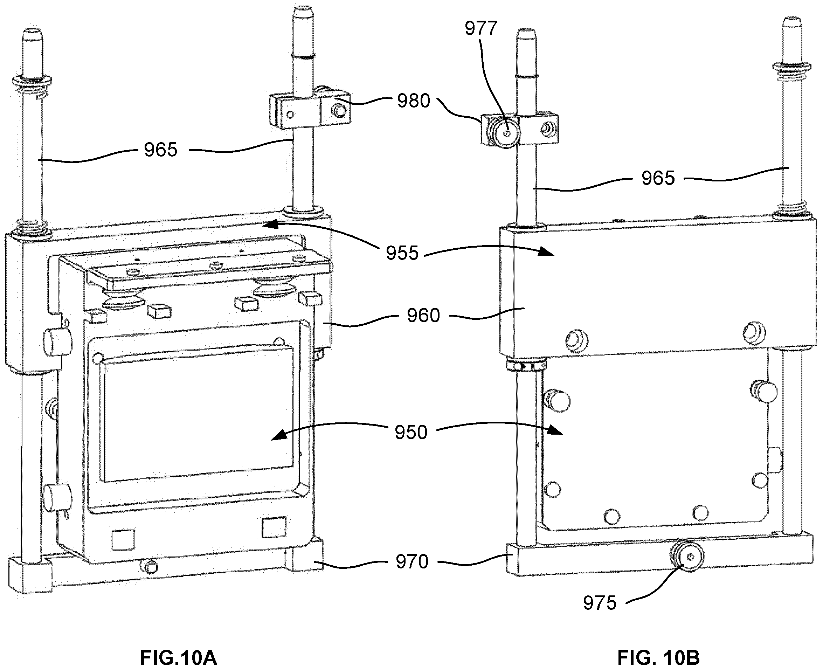

Fig. 10A is a back side view of a moving element 950 with a pin mechanism 955 attached. Fig. 10B is a front side view of the moving element 950 with the pin mechanism 955 attached. The pin mechanism 955 includes a body 960, two pins 965, a lower support 970, a lower cam follower 975 provided to the lower support 970, and an upper cam follower 977 provided to a cam follower support 980 on one of the pins 965.

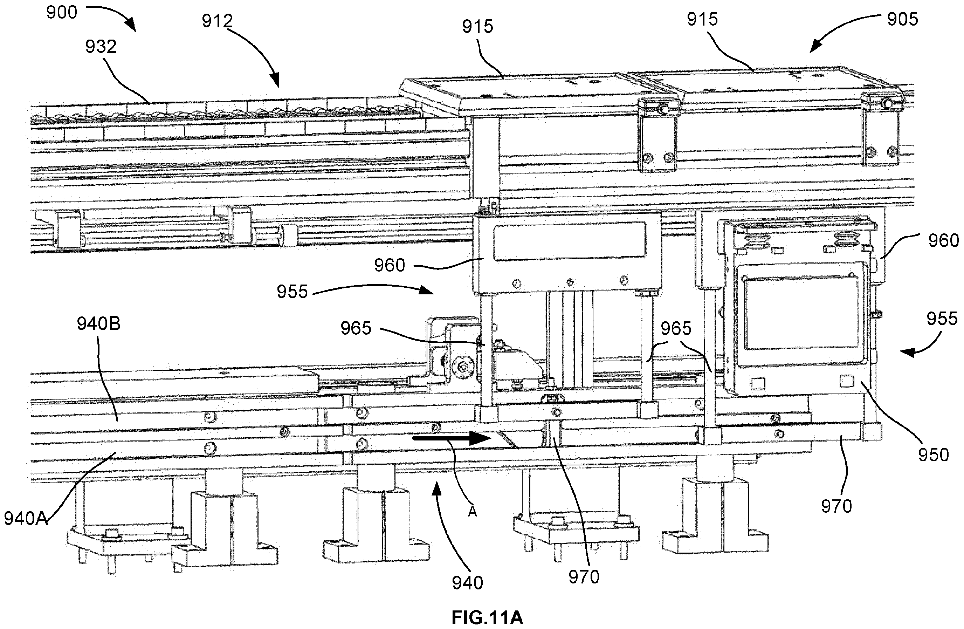

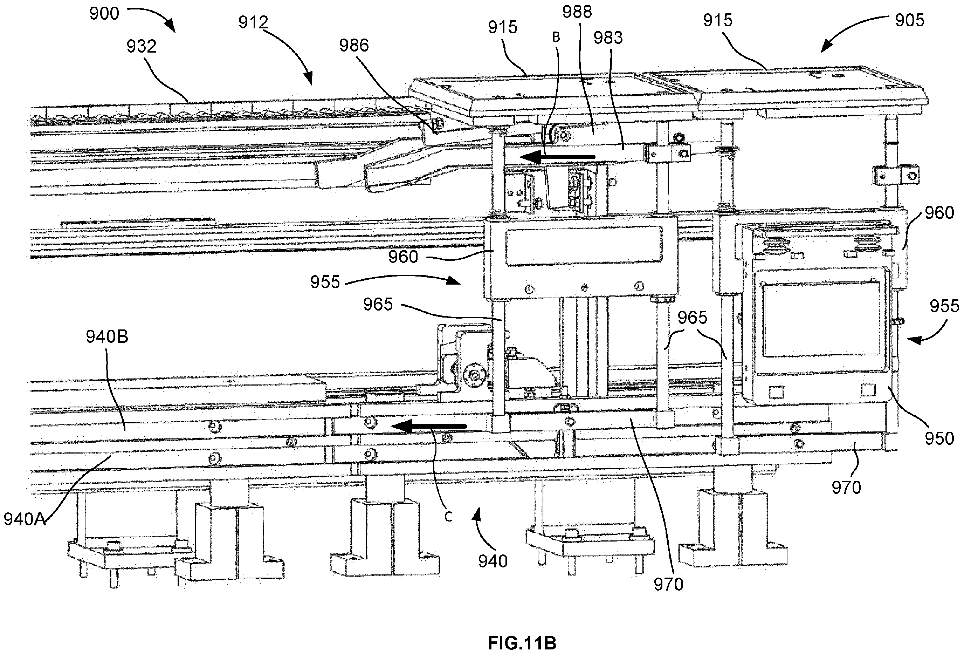

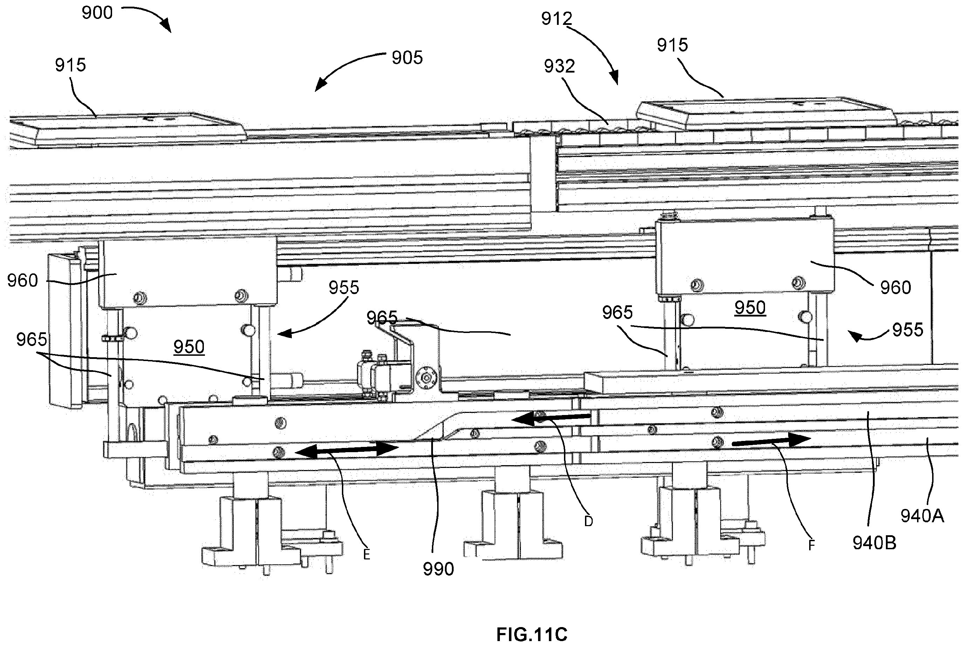

Fig. 11A illustrates a more detailed view of the engagement mechanism 945, which includes the pin mechanism 955 and the cam tracks 940. Fig. 11B further illustrates a stopper mechanism 982 for the pallets 915, which is actuated by an upper cam track 983, which engages with the upper cam follower 977 of Figs. 10A and 10B. Fig. 11C illustrates another detailed view of the engagement mechanism. In Figs. 11A and 11B, the left pin mechanism 955 is shown without the moving element 950 whereas the right pin mechanism 955 is shown with the moving element 950. The linear motor conveyor for the moving elements itself is not shown.

In Fig. 11A, arrow A indicates that the lower cam follower 975 of the pin mechanism 955 can move along a lower cam track 940A with the pins 965 lowered when a moving element 950 is returning to an initial position or when passing through without engagement with a pallet 915. When engaging a moving element 950 with a pallet 915, the lower cam follower 975 moves upward in an open slot 984 to raise the pins 965 to engage the pallet 915 and the lower cam follower 975 travels in an upper cam track 940B to maintain engagement of the pins 965. In some cases, the lower cam follower 975 can be configured to be, for example, spring loaded, otherwise feed upward, or the like, to move up in the vertically open slot unless the slot is covered.

As shown in Fig. 11B, a stopper 986 can be used to stop a pallet 915 during engagement and then release once the pallet 915 is engaged with the moving element 950. In this case, as the pins 965 raise, the upper cam follower 977 engages the upper cam track 983 to cause a rocker arm 988 to deactivate the stopper 986 (release the pallet) when moving in the direction shown by arrow B. Alternatively, a servo/pneumatically operated stopper may also be used. Once the pins 965 have been raised, the lower cam follower 975 travels in the upper cam track 940B as illustrated by the arrow C.

In Fig. 11C, the nearer linear motor, moving elements, and pin mechanisms are not shown to allow a view of the lower cam tracks 940 but moving elements and pin mechanisms at an opposite side of the accumulator conveyor track 905 are shown and they would have a similar configuration to the nearer similar elements. As shown in Fig. 11C, as a moving element 950 moves to an end of the linear motor conveyor 910, the lower cam follower 975 of the pin mechanism 955 is in the upper cam track 940B as illustrated by arrow D. The upper cam track 940D is configured such that the lower cam follower 975 moves to the lower cam track 940A to lower the pins and release the pallet 915 onto the accumulating conveyor 905. A toggle 990 or the like may be provided to prevent the lower cam follower 975 from re-entering the upper cam track 940B on the return path. Arrow E illustrates a portion of the lower cam track that can be used as a queuing area for moving elements 950. Arrow F indicates a return path for the lower cam follower 975 along the lower cam track 940A with pins in a lowered position.

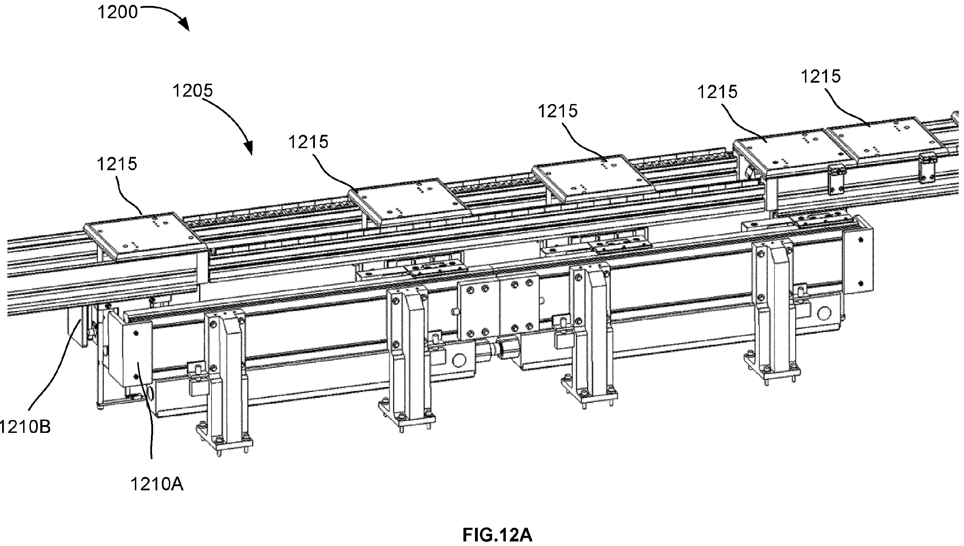

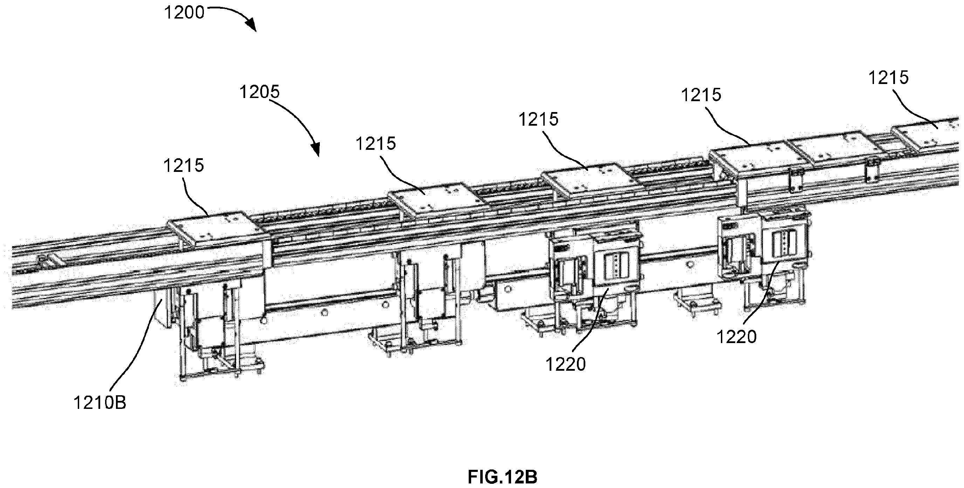

Figs. 12A and 12B illustrate another embodiment of an automation system 1200 in which a primary/accumulating conveyor 1205 is augmented by an augmenting/auxiliary/linear motor conveyor 1210 to provide additional functionality. As in the above embodiment, the automation system 1200 also includes a plurality of pallets 1215 configured to work with both the accumulating conveyor 1205 and with the linear motor conveyor 1210.

In this embodiment, the accumulating conveyor 1205 includes a middle section, which can be a roller segment or a continuation of the accumulating conveyor 1205. There are two linear motor conveyors 1210 placed opposite each other under the accumulating conveyor 1205 (similar to the embodiment above). In Fig. 12B, a support structure of the nearer linear motor 1210A is removed to show underneath the accumulating conveyor 1205, the farther linear motor conveyor 1210B, and a rear view of moving elements 1220 that travel on the near side linear motor conveyor 1210A.

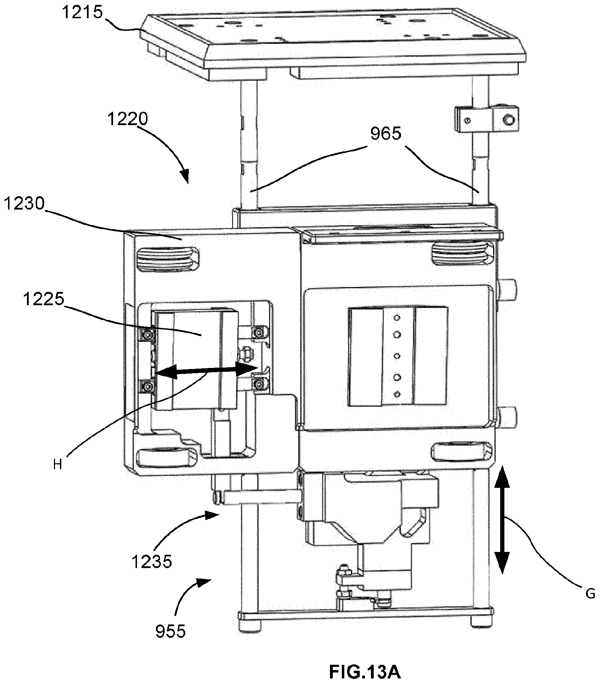

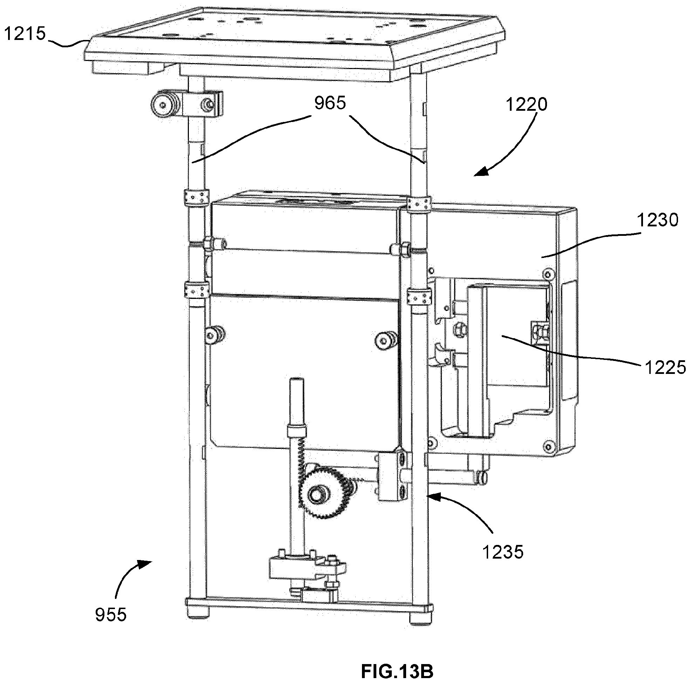

In this embodiment, the moving elements 1220 are configured with a sidecar 1225, provided in a sidecar portion 1230 of the moving element 1220, which provides actuation to move the pins 965 of the pin mechanism 955 described above. Generally speaking, as illustrated in Fig. 13, the sidecar 1225 connects with the pin mechanism 955 via an actuation mechanism 1235 (shown in more detail in Fig. 13B) to raise and lower the pins (arrow G) based on relative movement between the sidecar 1225 and the moving element 1220 (arrow H). Additional detail on the sidecar and its operation can be found in a US Patent Application by the same applicant, filed concurrently herewith, which is hereby incorporated herein by reference.

In this embodiment, a stopper (an example described below) can be provided to the accumulator conveyor 1205 and operated to stop a pallet on the accumulating conveyor 1205, a moving element 1220 with pin mechanism 955 is positioned by the linear motor conveyor 1210 beneath the pallet 1215 and the sidecar 1225 is moved relative to the moving element 1220 to raise the pins 965 and engage the pallet 1215. The stopper is released, and the pallet 1215 moves under control of the linear motor conveyor 1210.

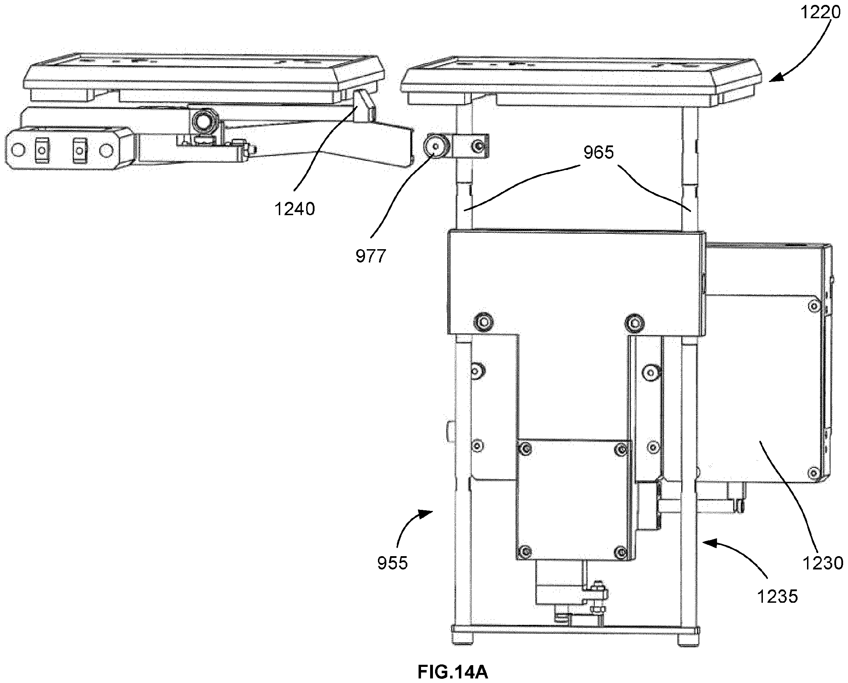

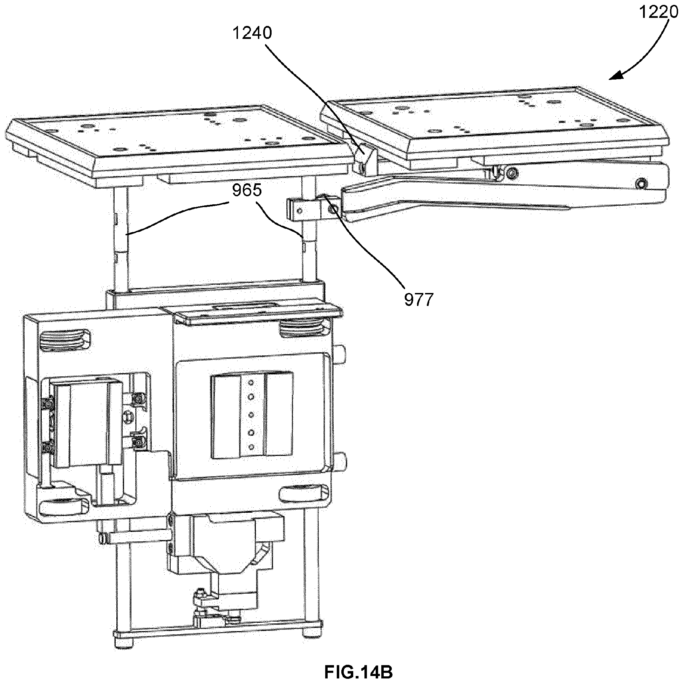

Similar to the embodiment of Figs. 9A and 9B, and as illustrated in Figs. 14A (front view) and 14B (rear view), an upper cam follower 977 on the pin mechanism 955 can be used with an upper cam track 983 to release a stopper 1240 as the pins 965 move into engagement with the pallet 1215. The use of a cam structure allows the pallet to be released as soon as the pins engage instead of relying on a separate servo motor, sensors, or the like. As will be understood, a mechanical system can sometimes be more cost effective, consistent, and effective in some automation systems.

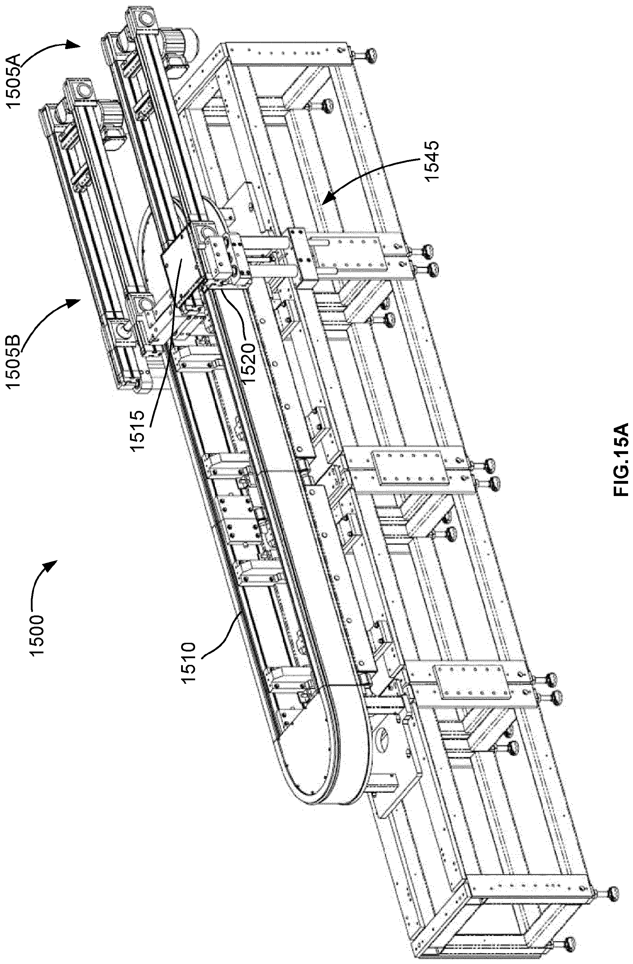

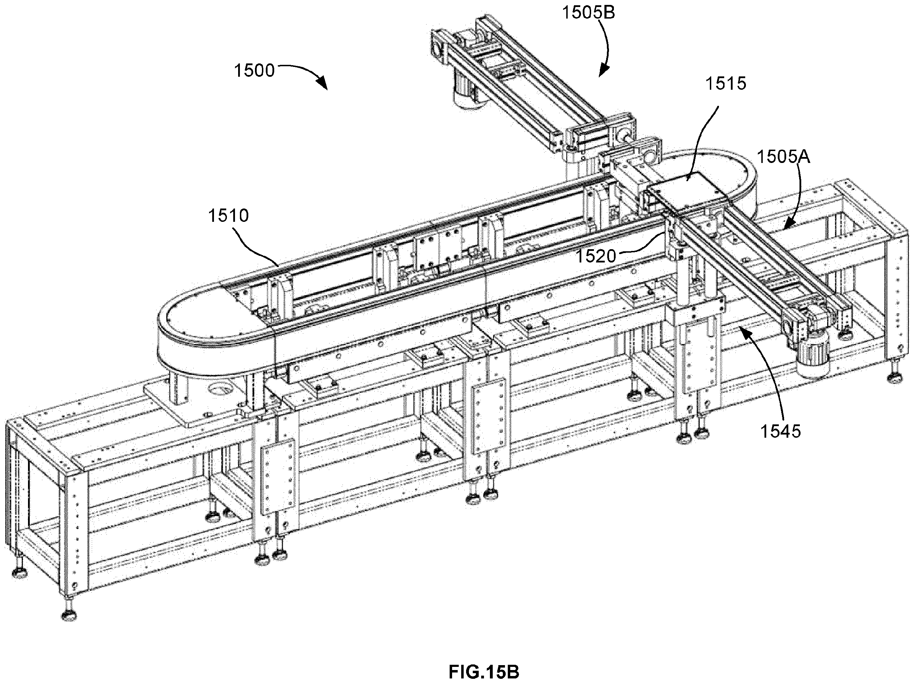

Fig. 15A and 15B illustrate alternative embodiments/configurations of an automation system 1500 in which a primary/accumulating conveyor 1505 is augmented by an augmenting/auxiliary/linear motor conveyor 1510. In these embodiments/configurations, a linear motor conveyor 1510 is positioned as a loop connecting two accumulating conveyor segments 1505A, 1505B. A moving element 1520 is positioned below a pallet 1515 on one accumulating conveyor segment 1505A, the pallet 1515 is then engaged by the moving element 1520 and carried by the linear motor conveyor 1510 to the other accumulating conveyor segment 1505B. One of skill in the art will understand that various other configurations may be possible, including those where the linear motor conveyor is configured as a straight-line rather than a loop.

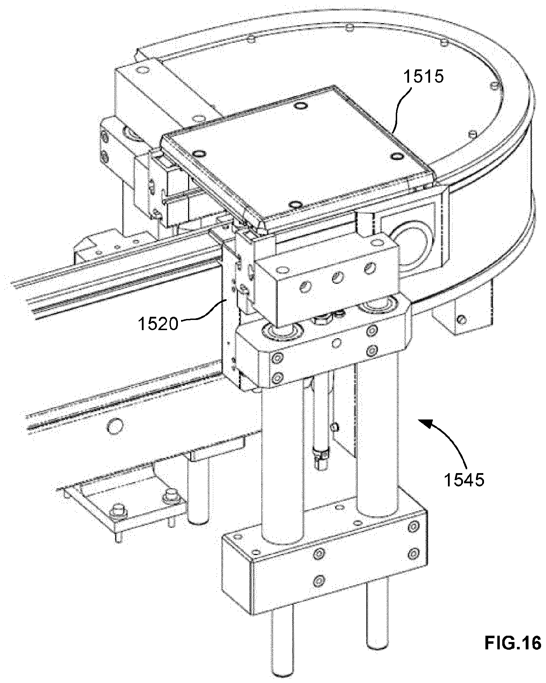

In these embodiments, a pallet 1515 may be moved by the first accumulating conveyor segment 1505A onto a pneumatic transfer mechanism 1545 (illustrated in more detail in Fig. 16) that, for example, lowers the pallet 1515 into engagement with the moving element 1520 of the linear motor conveyor 1510. A similar pneumatic transfer mechanism can then be used to disengage the pallet 1515 from the moving element 1520, raise the pallet 1515 and move it onto the second accumulating conveyor segment 1505B.

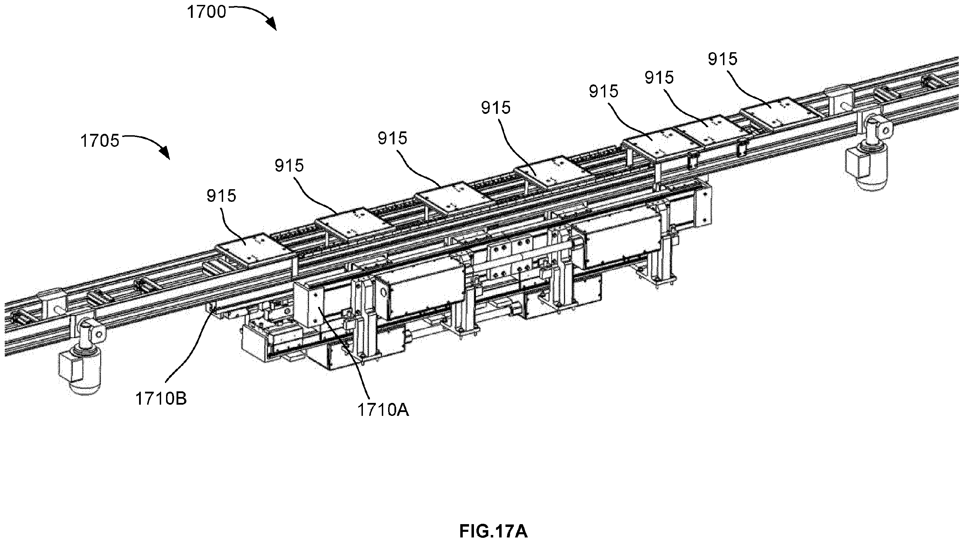

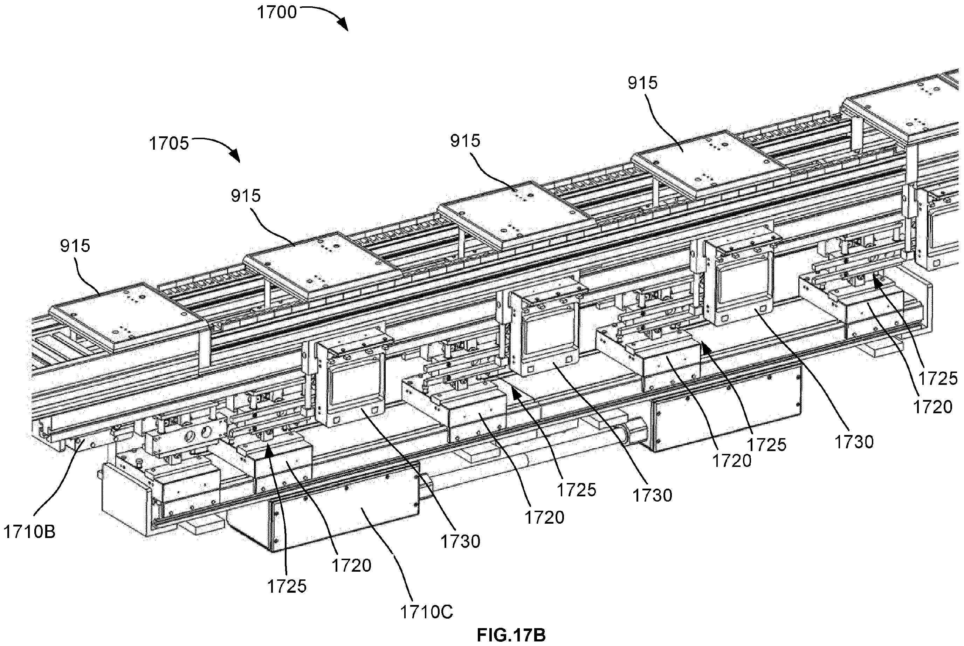

Fig. 17A and 17B illustrate another embodiment of an automation system 1700 in which a primary/accumulating conveyor 1705 is augmented by two auxiliary/linear motor conveyor 1710A, 1710B to provide additional functionality, similar to the embodiment of Figs. 9A and 9B. In Fig. 17B, a support structure of one of the nearer linear motor conveyor 1710A is removed to show underneath the accumulating conveyor 1705. This embodiment is similar to the embodiment of Figs. 9A and 9B except that instead of the cam driven activation of the pin mechanism 955, an additional linear motor conveyor 1710C is provided below the nearer and further linear motor conveyors 1710A, 1710B. The additional linear motor conveyor 1710C includes moving elements 1720 that are configured to activate, via an actuation mechanism 1725, the pin mechanism 955 provided to moving elements 1730 on the linear motor conveyors 1710A, 1710B to raise and lower the pins 965 and engage with the pallets 915.

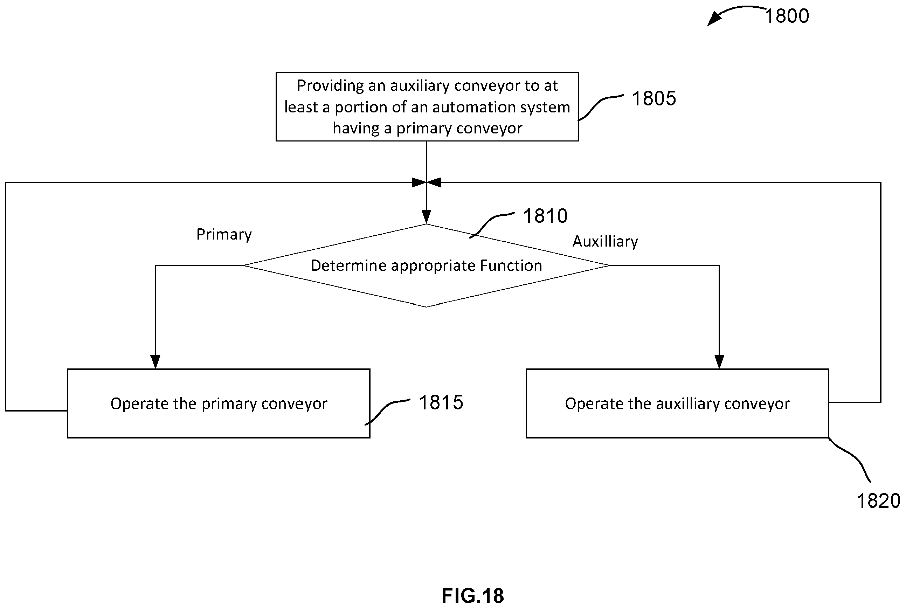

Fig. 18 is a flowchart of an embodiment of a method 1800 of controlling an automation system having a primary conveyor with a plurality of pallets. The method 1800 includes providing an auxiliary conveyor to the automation system such that the auxiliary conveyor covers at least an overlap portion of the automation system that would otherwise be covered by the primary conveyor 1805. In some cases, the overlap portion may be a predetermined location where the primary conveyor remains in place, a gap where a portion of the primary conveyor has been removed, a substitute section where the primary conveyor has been replaced by a substitute support that operates to support pallets but not provide any movement, or the like. In any case, the auxiliary conveyor is configured to connect with the plurality of pallets. When at least one of the plurality of pallets is in the overlap portion, the automation system can determine a required/appropriate function for the pallet 1810 and then either continue with the primary conveyor 1815 or selectively connect the auxiliary conveyor to the at least one of the plurality of pallets and operate the auxiliary conveyor to provide functions not available to the primary conveyor 1820. The automation system then returns to determining the function for the pallet or other pallets in the overlap area 1810.

In some embodiments involving two linear motor conveyors, the accumulating conveyor system can be configured such that control of the pallet can be passed among the accumulating conveyor itself, and either of the linear motor conveyors. For example, control of the pallet may be passed from the accumulating conveyor to a first linear motor conveyor for movement in one direction and then passed from the first linear motor conveyor to a second linear motor conveyor for movement in an opposite direction. In some cases, the pallet may alternatively be controlled by both the first and second linear motor conveyors, for example, to provide more stability in either position or acceleration, higher throughput, or the like. For example, the first and second linear motor conveyors can be used to implement an indexing system to provide higher throughput.

While embodiments herein have related to accumulating conveyor systems being augmented by linear motor conveyor systems, it will be understood that these structures may alternately be considered as a linear motor conveyor system being augmented/supplemented by an accumulating conveyor system or the like. Further, one of skill in the art, having read the present disclosure can also understand that there may be combinations of other types of conveyor systems that could augment/supplement the functionality of each other in similar ways. Further, while the description refers to augmentation of one conveyor system with another, some example embodiments may be considered a combination or hybrid of two conveyor systems working together in a synergistic fashion, allowing for different or enhanced functionality over the use of one conveyor system by itself. As further understood, the embodiments described are merely examples of arrangements that are possible to guide one of skill in the art in understanding the various combinations that may be possible. Aspects of each embodiment may be combined with aspects of other embodiments to create other variations.

In the preceding description, for purposes of explanation, numerous details are set forth in order to provide a thorough understanding of the embodiments. However, it will be apparent to one skilled in the art that these specific details may not be required. It will also be understood that aspects of each embodiment may be used with other embodiments even if not specifically described therein. Further, some embodiments may include aspects that are not required for their operation but may be preferred in certain applications. In other instances, well-known structures may be shown in block diagram form in order not to obscure the understanding. For example, specific details are not provided as to whether the embodiments described herein are implemented as a software routine, hardware circuit, firmware, or a combination thereof.

Embodiments of the disclosure or elements thereof can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with other modules and elements, including circuitry or the like, to perform the described tasks.

The above-described embodiments are intended to be examples only. Alterations, modifications and variations can be effected to the particular embodiments by those of skill in the art without departing from the scope, which is defined solely by the claims appended hereto.

## Claims

1. An automation system comprising a primary conveyor and a plurality of pallets configured to operate on the primary conveyor, the system comprising:
an auxiliary conveyor provided to an overlap portion of the automation system in which the auxiliary conveyor overlaps with the primary conveyor;
wherein the auxiliary conveyor is configured to connect with at least one of the plurality of pallets in the overlap portion to control the at least one of the plurality of pallets to augment the functions of the primary conveyor.

2. An automation system according to claim 1, wherein the primary conveyor is an accumulating conveyor and the auxiliary conveyor is a linear motor conveyor.

3. An automation system according to claim 2, wherein the linear motor conveyor is configured beneath the accumulating conveyor and moving elements on the linear motor conveyor engage with pallets on the accumulating conveyor from below the accumulating conveyor.

4. An automation system according to claim 2, wherein the linear motor conveyor is configured beneath and adjacent one side of the accumulating conveyor and moving elements on the linear motor conveyor engage with pallets on the accumulating conveyor from a side of the accumulating conveyor.

5. An automation system according to claim 4, wherein the linear motor conveyor comprises a first linear motor conveyor and a second linear motor conveyor opposite the first linear motor conveyor on an opposite side of the accumulating conveyor.

6. An automation system according to any one of claims 2 to 4, wherein the linear motor conveyor comprises moving elements and an engagement mechanism provided to at least one moving element, wherein the plurality of pallets are controlled by the linear motor conveyor by activating the engagement mechanism to engage with at least one of the plurality of pallets.

7. An automation system according to claim 6, wherein the engagement mechanism comprises cam tracks provided to the automation system and cam followers provided to the moving elements configured such that the cam followers follow the cam tracks to raise and lower pins that engage with the pallet.

8. An automation system according to claim 7, wherein the engagement mechanism comprises an actuation mechanism provided to the moving elements to raise and lower the pins.

9. An automation system according to claim 7, wherein the engagement mechanism comprises an activation linear motor conveyor provided adjacent the linear motor conveyor to toggle the pins between raised and lowered positions.

10. An automation system according to any one of claims 1 to 9, further comprising a stopper on the accumulating conveyor to hold at least one of the plurality of pallets in place while the at least one pallet is being engaged by the auxiliary conveyor.

11. A method for controlling an automation system comprising a primary conveyor and a plurality of pallets for the primary conveyor, the method comprising:
providing an auxiliary conveyor in an overlap portion of the automation system in which the auxiliary conveyor overlaps with the primary conveyor, wherein the auxiliary conveyor is configured to connect with at least one of the plurality of pallets; and
when the at least one of the plurality of pallets is in the overlap portion, selectively connecting the auxiliary conveyor to the at least one of the plurality of pallets and operating the auxiliary conveyor to provide functions to the automation system not available using the primary conveyor.

12. A method according to claim 11, wherein the auxiliary conveyor can operate while the primary conveyor is operating in the overlap portion.

13. A method according to any one of claims 11 to 12, wherein the functions not available using the primary conveyor comprise at least one of: controlled acceleration in either direction, individual positioning control in either direction, asynchronous or synchronous movement, higher throughput, speed matching, moving the at least one of the pallets to a different portion of the primary conveyor, and reduced settling time.

14. A method according to any one of claims 11 to 13, wherein the primary conveyor is an accumulating conveyor and the auxiliary conveyor is a linear motor conveyor.

15. A method according to any one of claims 11 to 14, wherein the selectively connecting the auxiliary conveyor comprises determining if the appropriate function requires the use of the auxiliary conveyor.
